Europäisches Patentamt

(19) European Patent Office

Office européen des brevets

(11) Publication number: **0 175 483**
**B1**

(12) **EUROPEAN PATENT SPECIFICATION**

(45) Date of publication of patent specification: **14.06.89**

(51) Int. Cl.⁴: **B 65 G 17/08**

(21) Application number: **85305875.8**

(22) Date of filing: **19.08.85**

(54) Conveyor belt having insertable & selectable conveying members.

(30) Priority: **20.08.84 US 642534**

(43) Date of publication of application:
**26.03.86 Bulletin 86/13**

(45) Publication of the grant of the patent:
**14.06.89 Bulletin 89/24**

(84) Designated Contracting States:
**DE FR GB IT**

(56) References cited:
**DE-A-1 955 292**
**GB-A-1 359 893**
**US-A-3 442 368**
**US-A-4 213 527**

(73) Proprietor: **The Laitram Corporation**
**220 Laitram Lane**
**Harahan Louisiana 70123 (US)**

(72) Inventor: **Lapeyre, James M.**
**13 Richmond Place**
**New Orleans Louisiana 70115 (US)**

(74) Representative: **Arthur, John William et al**
**FITZPATRICKS 4 West Regent Street**
**Glasgow G2 1RS Scotland (GB)**

Courier Press, Leamington Spa, England.

## Description

This invention relates to conveyor belts.

US-A-4 213 527 discloses a pivotally joined conveyor belt, comprising a plurality of modules of identical pitch dimensions adapted to be pivotally connected end-to-end and side-by-side, said modules comprising a base member integrally moulded from plastic material, having first and second pivoted ends pivotally joined with other modules, defining an attaching area on the top side of said base member, and including means for receiving a driving force. In US-A-4 213 527 a conveying member is formed integrally with said base member at said attaching area. Thus, the conveyor belt is limited in application. Furthermore, in US-A-4 213 527, said means for receiving a driving force is in the form of a tooth for cooperation with recesses in a sprocket forming part of a driving mechanism with a large number of moving parts.

An object of the present invention is to provide a conveyor belt which can be readily adapted to be used to convey items of various shapes and sizes and which can be used with a driving arrangement having few moving parts.

In order to achieve the above object the invention is characterised by conveying members of a selected shape having an attaching bottom portion for removably attaching to said attaching area of said base members, said conveying members having a shape for providing upstanding walls of a selected configuration on said top side of said base member, and in that said means for receiving a driving force includes a conductive material secured to selected elongate elements located at the outside edge of selected ones of said plurality of modules, and a plurality of electrical coils positioned to electrically interact with said conductive material of said selected elongate elements such that said selected elongate elements and said electrical coils operate as an armature and drive coils respectively of a linear motor so that sequentially energising said electrical coils generates a moving field which interacts with said conductive material to provide said driving force.

A preferred form of the conveyor belt which lends itself to ready adaptation is further characterised in that said attaching area is a recess defined in said top side of said base member, and an overhang defined by said top side, which overhang extends over said recess, and in that said attaching portion of said conveying member is shaped and formed for being received in said recess and retained by said overhang.

Embodiments of the present invention will be described by way of example only with reference to the accompanying drawings in which:

Fig. 1 shows a conveyor belt which includes a variety of different conveying surfaces which may be provided according to the teachings of this invention.

Fig. 2 shows a section of the conveyor belt of Fig. 1 and further illustrates a plurality of the modules making up the belt of Fig. 1 being pivotally connected, and which include vertical flight conveying members.

Fig. 3 is a perspective view of the base portion and a vertical flight insert of a single module of Fig. 2 wherein the first plurality of pivot ends are laterally offset from the second plurality of pivot ends.

Fig. 3A shows a break-away of a single elongated element making up the base member of Fig. 3.

Figs. 4A and 4B are side view of the module and conveying member respectively of Fig. 3.

Figs. 5A and 5B are top views of the module and conveying member respectively of Fig. 3.

Fig. 6 discloses a typical belt formed of modules similar to that of Fig. 2 except that there is shown a toothed sprocket wheel moving into recesses in individual modules.

Fig. 7 illustrates a side view of a belt of formed of modules of the type shown in Fig. 2 as the belt travels around a sprocket.

Fig. 8 illustrates a side view of a modular belt wherein there is shown a toothed sprocket wheel engaging the link ends of each module.

Fig. 9 shows a top view of the base member of Fig. 6 having the first plurality of pivot ends in line with the second plurality of pivot ends, and including recesses for receiving the projections of a toothed sprocket wheel.

Fig. 10 shows a top view of a base member similar to the base member of Fig. 9, except the first plurality of ends are laterally offset from the second plurality of pivot ends.

Fig. 11 shows one embodiment of a side view and bottom view of a base member having a top view similar to that of Fig. 10.

Fig. 12 shows both a side and bottom view of still another alternate embodiment having a top view similar to that of Fig. 10.

Fig. 13 shows still another top and bottom view of another alternate embodiment having a top of a similar to that of Fig. 10.

Fig. 14 shows a conveyor belt section having conductive material imbedded in the outside modules of a belt which serve as the armature of a linear motor having electrical coils which serve as a stator for interacting with and moving said armature.

Figs. 15 and 16 show a side and end view respectively of the belt of Fig. 14 with the stator coils in place.

Fig. 17 illustrates a conveying module similar to Fig. 2 except two conveying flight members are attached to each base member.

Figs. 18A and 18B show still other alternate methods of attaching the conveying members of various shapes to the top portion of the base member.

Figs. 19A and 19B show yet another method of attaching the conveying member to the base member.

Figs. 20A, 20B and 20C show alternate embodiments of front views of conveying members having a side view similar to Fig. 4B.

Fig. 21 shows an insertable module which may be used to form side walls on the conveyor belt or alternately a series of channels running lengthwise to the conveyor belt.

Fig. 22 is a perspective view of an insertable conveying member which provides individual containers on the conveying surface.

Figs. 23A and 23B are side and end views respectively of still another conveying member which forms a conveyor belt having a series of longitudinal channels suitable for conveying tubular or stacked disc shaped items.

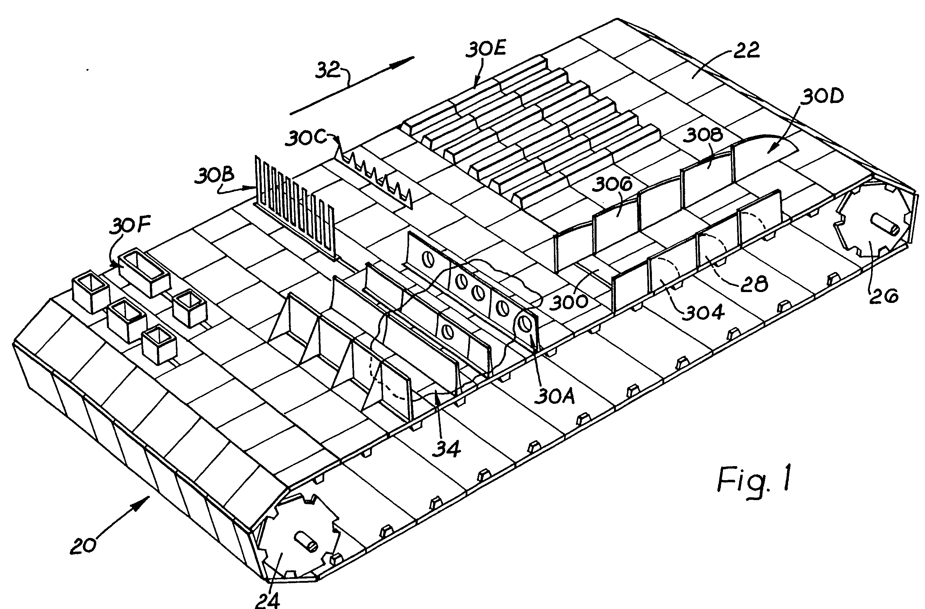

Referring now to Fig. 1, there is shown generally at 20 an endless loop conveyor belt 22 having a first having a first sprocket 24 and a second sprocket 26. Further, as can be seen, belt 22 has a section with side walls 28, and a top surface of various shapes 30A through 30F for moving various items of different shapes in direction as indicated by an arrow 32.

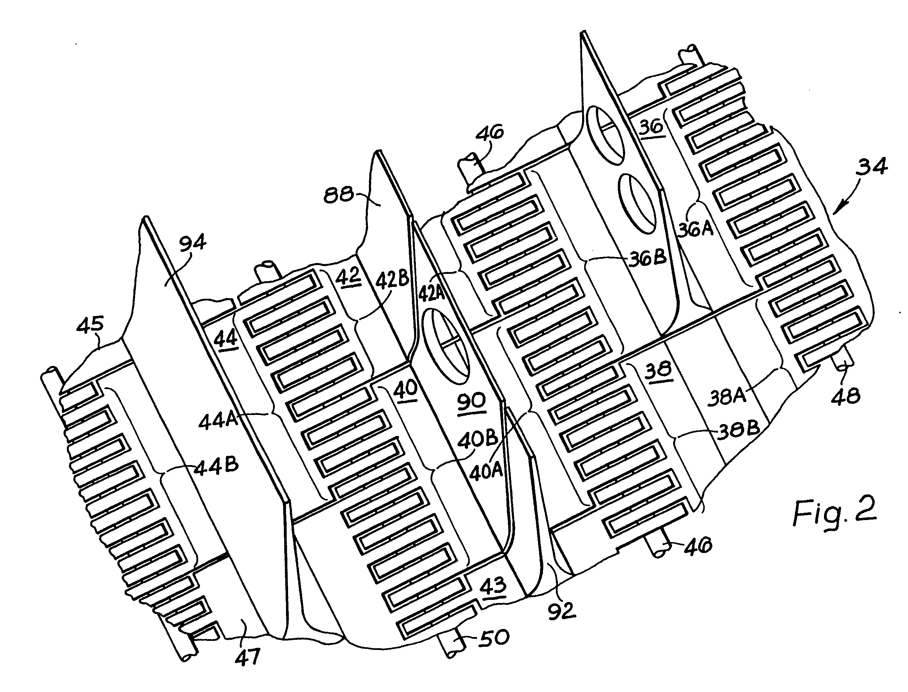

As shown in Fig. 2, which is a blown up portion of a section 34 of the conveyor belt of Fig. 1, section 34 of belt 22 is formed of a multiplicity of identical modules, such as modules 36, 38, 40, 42 and 44, each of which has a first plurality of pivot ends 36A, 38A, 40B, 42B and 44B respectively. As can also be seen, modules 36 and 38 are arranged side-by-side such that the apertures defined in each of the plurality of pivot ends 36B and 38B are arranged coaxially. In a similar manner the modules 40 and 42 are also arranged side-by-side such that the pivot holes defined in the plurality of link ends 40A and 42A are also coaxial. The plurality of pivot ends 36B and 38B of their respective modules 36 and 38 are then intermeshed with the plurality of pivot ends 40A and 42A of modules 40 and 42 such that all of the pivot holes of the intermeshed pivot ends are coaxial and the modules are all pivotally connected by a single pivot rod 46. Thus it can be seen that the conveyor belt of Fig. 1 is therefore formed of a large plurality of such modules arranged side-by-side and end-to-end and joined by a multiplicity of pivot rods such as 46, 48 and 50 so that the conveyor belt may be formed as an endless loop around sprockets 24 and 26 as is shown in Fig. 1.

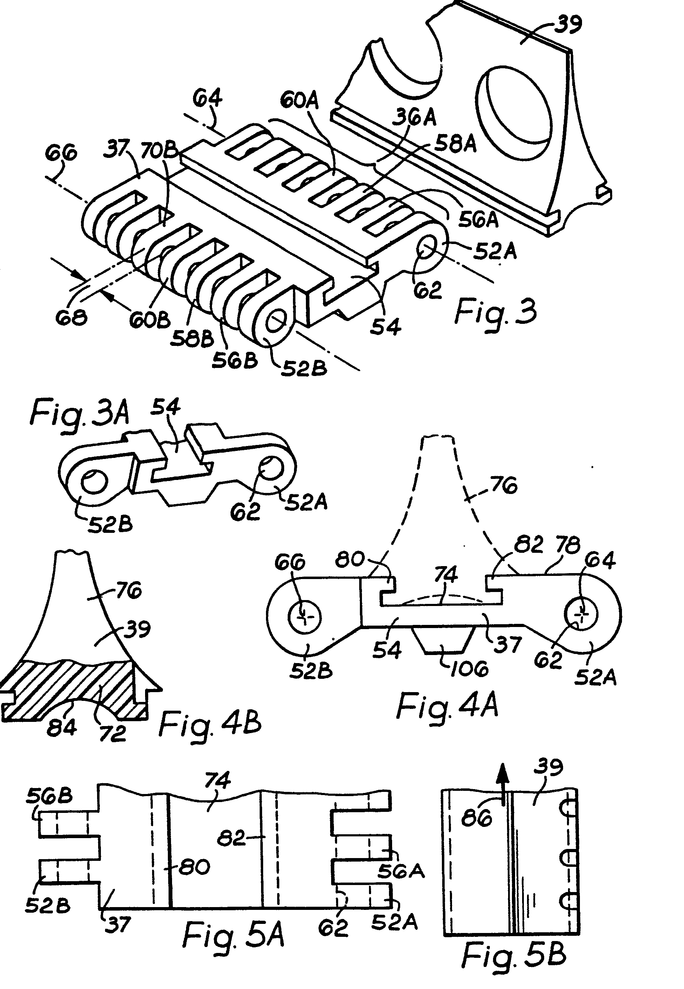

Referring now to Fig. 3, there is shown a perspective view of one of the modules, such as module 36 having a base member 37 and a conveyor member 39 which make up the section of belt 34 shown in Fig. 2. As will be appreciated by those skilled in the art, the base member 37 of such a module is preferably formed by injection moulding of inherently slick or low friction material such as polyproplene, polyethylene, acetal and the like. The vertical flight or conveyor member 39 will normally also be moulded of such materials, but could be moulded from a softer and more resilient rubber or plastics. Such conveyor members could also be injection moulded, but would normally be moulded by an extrusion process because of the continuous and regular cross-section. As can be seen more clearly in the broken-out view of Fig. 3A, the base member 37 of each module is formed of a plurality of elongated elements each of which has a first pivot end 52A and a second pivot end 52B joined by an intermediate section 54. In a similar manner, the plurality of pivot ends 36A of the base member 37 is comprised of a plurality of parallel members such as shown at 52A, 56A, 58A and 60A, each of which member defines an aperture such as aperture 62 in pivot end 52A. And as can also be more clearly seen in this figure of a single base member, the pivot axis of the apertures such as aperture 62 defined in each of the parallel pivot ends of the pluralities of pivot ends 36A are all aligned coaxially along a second pivot axis 66. Although the pivot apertures of Fig.3 are shown as circular, such pivot apertures do not necessarily have to be circular in cross-section but may be another shape as required to permit cleaning, etc. However, a circular shape such as is shown in Figs. 3 and 3A is the most easily manufactured. Pivot axes 64 and 66, as will be appreciated by those skilled in the art are parallel to each other and thereby define a common first plane.

As can also be clearly seen by Figs. 3 and 3A, each of the plurality of link ends 36A and 36B respectively are joined by and formed integral with an intermediate section 54. Intermediate section 54, as can be seen, maintains each of the individual pivot ends of the plurality of pivot ends of 36A and 36B parallel to each other and at a selected spaced distance from each other. It will also be appreciated that since each of the pluralities of pivot ends must intermesh with the plurality of pivot ends of another base member, the individual pivot ends such as pivot ends 52A, 56A, 58A and 60A have a thickness which is less than the spacing between adjacent pivot ends such as the space indicated by arrow 68 between pivot end 70B and pivot end 60B.

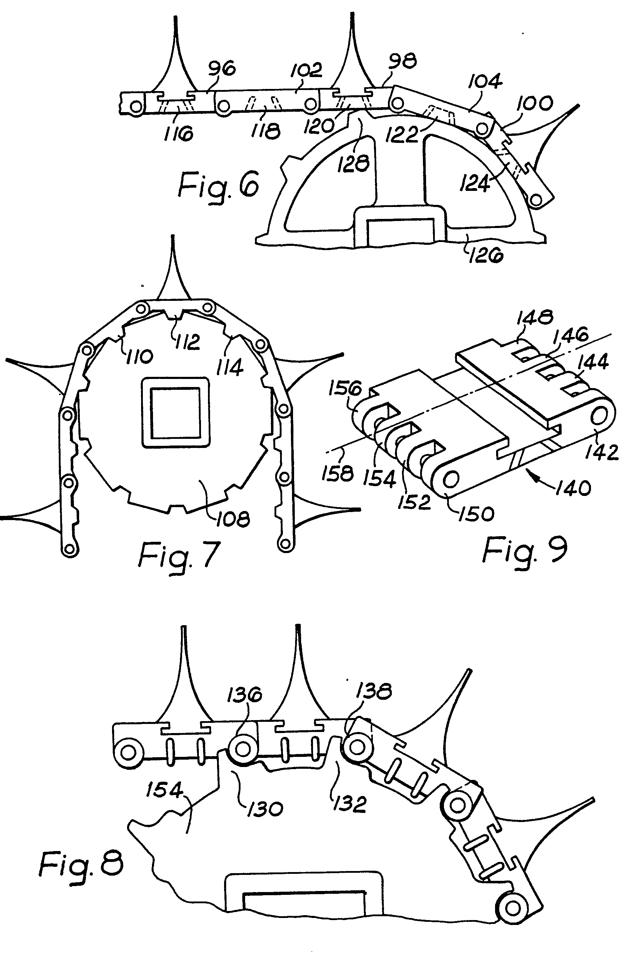

Further, although different types of pivot ends and intermediate sections may be used in forming modules incorporating the teaching of this invention (as will be discussed in detail hereinafter), in a preferred embodiment, such as shown in Figs. 3 and 3A, the first plurality of pivot ends 36A are laterally offset from the second plurality of link ends 36B such that each of the pivot ends of the first plurality 36A are in register with the spaces between the link ends of the second plurality of 36B and vice versa. Offsetting the plurality of pivot ends 36A laterally from the pivot ends 36B as illustrated in Fig. 3 and 3A, allows the modules to be arranged end to end and still provide a substantially continuous outside edge. Referring again to Fig. 3, and now to Figs. 4A and 4B which are side views of the base member 37 and conveying member 39 of Fig. 3, it can be seen that the conveying member 39 which is made out of a material such as hard rubber, plastics, or the like, is formed with an attaching portion 72 suitable for locating within a recess 74 of the base member 37 and includes an upper portion 76 of substantially any desired shape which protrudes above the top plane 78 of the base member 37 thereby providing a conveying surface which exhibits substantially any shape necessary for conveying items requiring special handling. As shown, the conveying member 39 includes a bottom portion or an attaching portion 72 which conforms to the recess 74 in base member 37 and which is restrained within the recess 74 by means of an overhang such as ledges 80 and 82 clearly shown in Figs. 4A and 5A, which extend over the recess 74 thereby maintaining conveying member 39 in position. As can best be seen in Fig. 4B, conveying member 39 may also include a hollow or scalloped out area 84 which would allow attaching portion 72 of conveying member 39 to be deformed sufficiently to be inserted in the recess 74 and under the restraining ledges 80 and 82 if the conveying member is made of a resilient material. This of course allows for easy insertion of a resilient conveying member. Conveying members which are non-flexible or not resilient may of course be inserted from the side as is indicated in Figs. 5A and 5B by heavy arrow 86. It will, of course, be appreciated that the conveying member 39 may be of a length substantially the same as that of the width of the base member 37 such that a conveying member may be inserted in each base member making up a belt such as shown by vertical flight members 88, 90 and 92 which extend across modules 40, 42 and 43 in Fig. 2. Alternatively, and as is also shown in Fig. 2, a single conveying member 94 may have a length equal to a plurality of the widths of two or more modules, and extend across two or more such modules as shown by conveying member 94 extending beyond both ends of module 44 and across modules 45 and 47 when the modules are arranged in a side-by-side relation. To fabricate a belt wherein the conveying member extends across two or more modules, it will be appreciated of course that the side-by-side modules should first be pivotally connected and then the conveying member 94 inserted into the recess 74. It will further be appreciated that although the conveyor belt may be fabricated wholly out of modules, wherein each module includes a conveying member, it should be understood that as shown in Fig. 6, and as will be discussed in detail hereinafter a desired belt may be fabricated partially out of modules having conveying member according to the teachings of this invention, such as modules 96, 98 and 100, and partially of similar plain top modules, which do not include the insertable conveying members such as modules 102 and 104.

In the embodiment of Fig. 4A, there is also shown a tooth member 106 extending from the intermediate section 54 and at substantially equal distance from the two pivot axes 64 and 66. As can be seen in Fig. 7, a sprocket wheel 108 has cooperating recesses 110, 112 and 114 which receive a tooth similar to tooth 106 of Fig. 4A, and similar teeth on other modules, such that the modules are guided in a direction which is orthogonal to the axes 64 and 66 and which at the same time is substantially parallel to the plane defined by the axes 64 and 66. It will, of course, be appreciated that as shown in Fig. 1, and discussed in detail hereinafter, the cross-section of the conveying member may have any suitable shape for providing the desired conveying surface necessary to handle the items being conveyed.

It will be appreciated of course that as discussed in the background of this application there are now various types of modular belts being manufactured. Therefore, referring again to Fig. 6 there is shown a side view of another type module which incorporates the insertable conveying member of this invention, but which is guided in a different manner. As shown, rather than using a tooth on each module each row of modules instead defines a recess such as recesses 116, 118, 120,122 and 124 suitable for receiving a tooth protruding from the circumference of a drive sprocket wheel 126. For example, recess 120 is shown as receiving tooth 128.

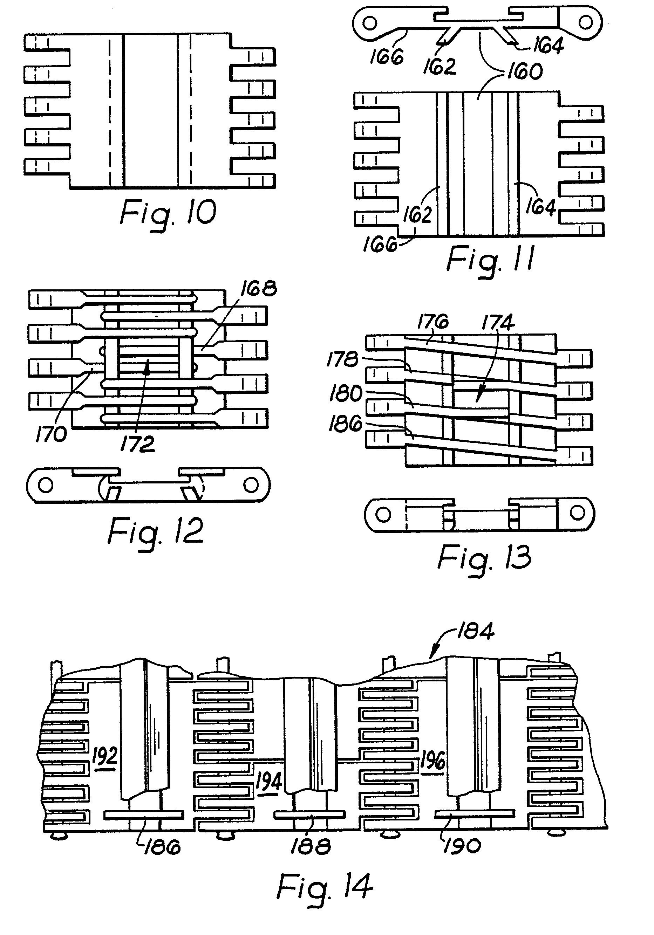

In a similar manner, Fig. 8 shows still another type of base member of a link belt wherein contoured teeth 130 and 132 extending from the circumference of another sprocket 154 engage and contact surfaces 136 and 138 on the link or pivot end rather than at an intermediate recess. Thus, it will be appreciated that the teachings of this invention may be incorporated with link belts which may be different in appearance. As a further example, Fig. 9 illustrates a single module 140 comprised of a first plurality of pivot ends 142, 144, 146 and 148 and which is the type shown in Fig. 6 without one of the various conveying members being inserted. In this module 140, it can be seen that the first plurality of pivot ends on one side of the base member are in line with pivot ends 150, 152, 154 and 156 on the other side as is illustrated by straight line 158 which extends through pivot ends 146 and 154. This in line arrangement would also apply to modules of a belt similar to that shown in Fig. 8. As a further example, Fig. 10 shows a top view of a base member wherein the pivot ends are laterally offset. Several types of base member construction may present a top view similar to that shown in Fig. 10. As can be seen from the bottom and side view of Fig. 11 a sprocket tooth of a sprocket wheel engages a pocket 160 formed by angled members 162 and 164 protruding from the underside portion 166 of the base member rather than a recess actually formed in the base member. Likewise, as shown in the side and bottom views of Fig. 12, the plurality of alternating elongated members such as members 168 and 170 may include partially void areas such as 172 which form the recess for receiving the tooth of a sprocket. In a similar manner, the side and bottom views of Fig. 13 show how a recess 16, 74 may be formed even though the elongated members include angled members 176, 179, 180 and 182 to achieve the lateral offset of the two pluralities of pivot ends.

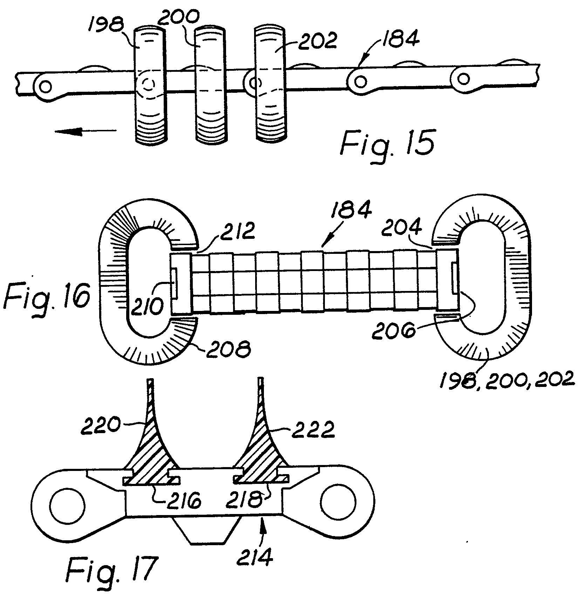

The belt 184 is driven as follows. According to Figs. 14, 15 and 16, an electric conductive material 186, 188 and 190 is secured to selected modules such as modules 192, 194 and 196 located at the outside edge of belt 184 which is comprised of a plurality of otherwise similar modules. Although the conductive material may be secured by any means to the selected modules, it will be appreciated that in a preferred operation the conductive material may preferably be embedded in the end portions of the selected modules which will ultimately form the edges of the assembled belt during the injection moulding process. A plurality of these modules having the conductive material embedded therein are then arranged end-to-end on both edges of the belt such that they are in alignment with each other. Further as is shown in Figs. 15 and 16, one or more C-shaped coils 198, 200 and 202 are arranged such that the opening 204 of the C-shaped coil passes over the aligned magnetic member on side 206 of belt 184. In a similar manner, another series of C-shaped coils (such as coil 208) are arranged so that the conductive materials on side 210 pass between the C-shaped openings 212 of their respective coils. Thus in this manner, the conductive members in the belt act as the armature of a linear motor and electrically interact with the coils which are sequentially electrically activated to drive the belt in a direction orthogonal to the pivot axis and substantially parallel to the plane defined by the pivot axis.

As discussed heretobefore, a single conveying member may be provided having a desired conveying surface of any desired shape. However, as shown in Fig. 17, a typical base member 214 similar to that discussed with respect to Fig. 4A may instead define a pair of recesses 216 and 218 each of which receives a conveying member 220 and 222 respectively which may be similar for example to the vertical flight members discussed above. It will also be appreciated of course that more additional recesses could be included and three or more vertical flight or conveying members inserted in such recesses.

Further, although to this point the conveying members have been described as being secured to each individual base member by being inserted in recesses and retained by overhangs such as ledges or tabs, it will be appreciated of course that other methods of removably attaching the conveying member may be used. For example as shown in Fig. 18A conveying members 232 may be attached to base member 234 by screw members 236 and 238.

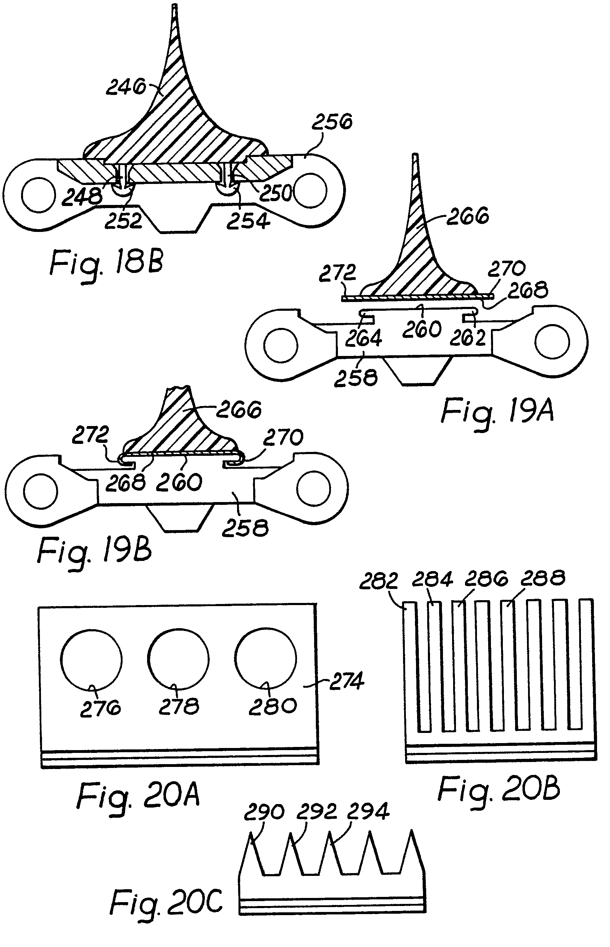

A still further method of attaching as shown in Fig. 18B, would be to simply mould integrally with the conveying member 246 fastening pins 248 and 250, with shoulders 252 and 254 which could be inserted through properly aligned conical shaped holes in the base member 256. These pins and shoulders would obviate the need for any undercuts in the plastic base member and for separate fastening devices such as screws.

As an alternative method to the previously described methods of attaching (wherein a recess was typically used) Figs. 19A and 19B show yet another method of attaching the conveying member to the base member. As shown in these figures, the conveying module 258 defines a top surface 260 which includes protrusions 262 and 264. The conveying member 266 is permanently and securely bonded to a deformable member 268, such as for example a strip of soft iron. The combination soft iron member 268 and conveying member 266 is then attached to the top surface 260 by crimping the edges 270 and 272 of the soft metal strip 268 around protrusions 262 and 264. Thus, it will be appreciated that the teachings of this invention are intended to include all methods of attaching one or more conveying members to a module and it should be appreciated that the techniques discussed herein are examples only.

To this point, it is clear that a conveying member such as a vertical flight conveying member may be combined with a base member to form a conveyor belt having a multiplicity of vertical flights extending across the width of the belt. Fig. 2 and section 34 of Fig. 1 discussed heretofore give specific examples of such a belt. However, Fig. 1 also clearly shows that many other various shaped conveying members may be combined with the base member to provide substantially any type of conveying surface necessary for handling and conveying items of any shape and which require special handling. For example, and as was discussed heretofore, vertical flight members such as shown in Figs. 2, 3 and 4 as well as other figures may be inserted in a base member 37 such as shown in Fig. 3 to produce a typical belt. Fig. 4B illustrates a side view of such a conveying member, and Fig. 20A is a typical front view. However, as shown in Fig. 20A, the typical vertical flight member 274 may also include openings such as apertures 276, 278 and 280 if desired. Of course even though the apertures shown in Fig. 20A are circular it would not be necessary that the apertures define any particular shape. Figs. 20B and 20C show views of still other possible conveying member forms. For example as is shown in Fig. 20B a conveying member having a side view similar to that of Fig. 4B may instead of a solid vertical flight member comprise a series of vertical members such as vertical pins 282, 284, 286 and 288 to form a comb-type conveying member. Alternatively, as shown in Fig. 20C, the vertical pins may be sharpened to form nails or spikes 290, 292 and 294 suitable for piercing and securing large and penetrable items such as large portions of meat, bales of cotton, hay etc. to the belt for conveying over a selected course including a course which includes up and down inclines.

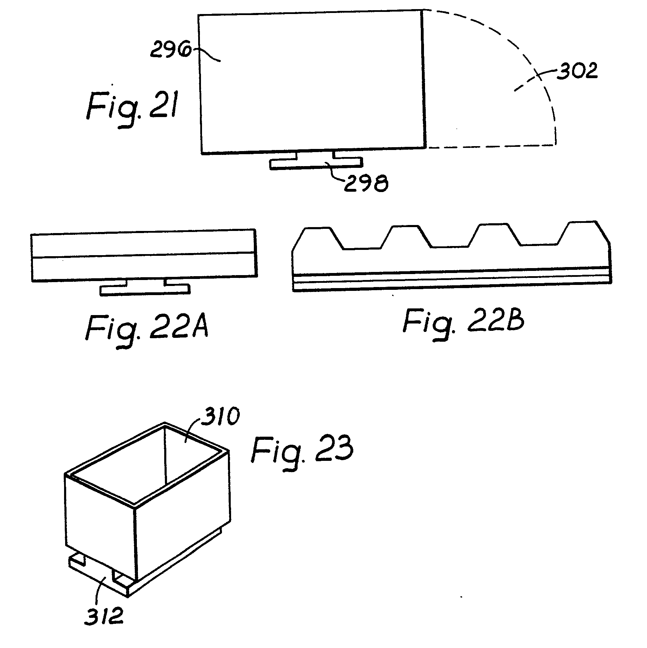

Referring now to Fig. 21, there is shown still another conveying member which is similar to the conveying member shown in Fig. 20A except that the vertical portion 296 is rotated 90° with respect to attaching portion 298 such that when this type of member is inserted in a base member such as base member 37 of Fig. 3, there may be formed sidewalls such as shown at 28 in Fig. 1 or intermediate vertical walls which are parallel to the direction of travel of conveying belt such as shown at 30D in Fig. 1. It will also be appreciated of course, that a·pair of such vertical walls perpendicular to the direction of travel of the conveying belt may be formed so as to produce a parallel channel such as channel 300 located between the two sets vertical walls 28 and 30D in Fig. 1. The vertical members such as shown on Fig. 21 may have a rectangular appearance as shown, or alternatively could include a trailing edge portion 302 as shown in Fig. 21, or trailing edges 304, 306 and 308 shown in Fig. 1. Such trailing edges maintain the formed channels even when the belt is reversing directions as it travels over a drive sprocket.

Referring now to section 30E of Fig. 1 and Figs. 22A and 22B, there is shown still another technique for forming longitudinal channels which are parallel to the direction of belt travel. The longitudinal channels formed by these insertable conveying members shown in Figs. 22A and 22B have been found to be particularly suitable for conveying tubular shaped items or a multiplicity of stacked disc shaped items such as cookies.

To this point, there have been discussed various types of conveying members which cooperate with a base member for forming a particular type of conveying surface on a conveying belt. Referring now to Fig. 23 and section 30F of Fig. 1, it can be seen that substantially any shape may be formed and used with this technique. For example, as shown in Fig. 23 an open box-like container 310 is secured to the base attaching member 312 which is inserted in the base member 37. Thus, according to this technique, an open box container for conveying small items may be provided. As shown at 30F in Fig. 1, such open faced containers may be of substantially any size and/or shape for carrying small items or even liquid items.

Thus, although there has been described to this point particular embodiments of modules for forming conveyor belts having a variety of conveying surface it is not intended that such specific references be considered as limitations upon the scope of this invention except insofar as set forth in the following claims.

## Claims

1. A pivotally joined conveyor belt (20), comprising a plurality of modules (36) of identical pitch dimensions adapted to be pivotally connected end-to-end and side-by-side, said modules (36) comprising a base member (37) integrally moulded from plastic material, having first and second pivoted ends (36A, 36B) pivotally joined with other modules (42), defining an attaching area (74) on the top side of said base member (37), and including means (186) for receiving a driving force, characterised by conveying members (39) of a selected shape having an attaching bottom portion (72) for removably attaching to said attaching area (74) of said base members (37), said conveying members (39) having a shape for providing upstanding walls of selected configuration on said top side of said base member (37), and in that said means for receiving a driving force includes a conductive material (186) secured to selected elongate elements located at the outside edge of selected ones of said plurality of modules (192), and a plurality of electrical coils (198) positioned to electrically interact with said conductive material (186) of said selected elongate elements such that said selected elongate elements and said electrical coils (198) operate as an armature and drive coils respectively of a linear motor so that sequentially energising said electrical coils (198) generates a moving field which interacts with said conductive material (186) to provide said driving force.

2. A pivotally joined conveyor belt (20) according to claim 1, further characterised in that said attaching area is a recess (74) defined in said top side of said base member (37) and an overhang (80, 82) defined by said top side, which overhang extend over said recess (74), and in that said attaching portion (72) of said conveying member (39) is shaped and formed for being received in said recess (74) and retained by said overhang (80, 82).

## Patentansprüche

1. Förderband (20) aus gelenkig miteinander verbundenen

Gliedern (36), die in ihren die Teilung des Förderbandes bestimmenden Maßen übereinstimmen, so ausgebildet sind, dass sie gelenkig Ende an Ende sowie Seite an Seite miteinander verbunden werden können, und aus einem in einem Stück aus Kunststoff geformten Basisiteil (37) bestehen, welches ein erstes und ein zweites Ende (36A, 36B) hat, an denen sie gelenkig mit weiteren Gliedern (42) verbunden sind, wobei auf der Oberseite des Basisteils (37) ein Befestigungsbereich (74) ausgebildet ist,

und mit Mitteln (186) zur Aufnahme einer Antriebskraft,

gekennzeichnet durch Förderelemente (39) von ausgewählter Gestalt mit einem Fußteil (72) zur lösbaren Befestigung an den Basisteilen (37) in deren Befestigungsbereich (74), welche (39) so ausgebildet sind, dass sie auf der Oberseite des Basisteils (37) hochstehende Wände von ausgewählter Gestalt bilden,

und dass die Mittel zur Aufnahme einer Antriebskraft einen leitenden Werkstoff (186), welcher an ausgewählten, länglichen Elementen angebracht ist, die sich am äußeren Rand von aus der Menge der Glieder (192) ausgewählten Gliedern befinden, sowie eine Anzahl elektrische Spulen (198) enthalten, welche so angeordnet sind, dass sie mit dem elektrischen Werkstoff (186) an den ausgewählten elektrischen Elementen in der Weise elektrisch wechselwirken, dass die ausgewählten, länglichen Elemente und die elektrischen Spulen (198) als Läufer bzw. Treiberspulen eines Linearmotors wirken, so dass eine aufeinanderfolgende Erregung der elektrischen Spulen (198) ein wanderndes Feld erzeugt, welches zur Erzeugung der Antriebskraft mit dem leitenden Werkstoff (186) in Wechselwirkung tritt.

2. Förderband nach Anspruch 1, dadurch gekennzeichnet, dass

der Befestigungsbereich als eine in der Oberseite des Basisteils (37) vorgesehene Ausnehmung (74) ausgebildet ist, dass durch die Oberseite ein Überstand (80, 82) gebildet ist, welcher über die Ausnehmung (74) auskragt, und dass das zur Befestigung dienende Fußteil (72) des Förderelementes (39) so ausgestaltet und geformt ist, dass es in die Ausnehmung (74) paßt und darin durch den Überstand (80, 82) festgehalten wird.

**Revendications**

1. Bande transporteuse (20) à jonctions pivotantes, comprenant une pluralité de modules (36) avec des dimensions de pas identiques, adaptés à être raccordés en pivotement bout-à-boute et côte-à-côte, lesdits modules (36) comprenant un élément de base (37) moulé intégralement en matière plastique, comprenant des première et seconde extrémités (36A, 36B) raccordées en pivotement à d'autres modules (42), définissant une zone de fixation (74) sur la face supérieure dudit élément de base (37), et comprenant des moyens (186) pour recevoir une force d'entrainement, caractérisée par des éléments transporteurs (39) de forme sélectionnée, ayant une partie de fond de fixation (72) pour être fixée de façon amovible à ladite zone de fixation (74) desdits éléments de base (37), lesdits éléments transporteurs (39) ayant une forme permettant d'obtenir des parois verticales ayant une configuration sélectionnée sur ladite face supérieure dudit élément de base (37), et en ce que ledit moyen pour recevoir une force d'entrainement comprend un matériau conducteur (186) fixé à des éléments allongés sélectionnés, disposés sur le bord extérieur de modules sélectionnés parmi ladite pluralité de modules (192), et une pluralité d'enroulements électriques (198) positionnés pour une coopération électrique avec ledit matériau conducteur (186) desdits éléments allongés sélectionnés, de façon que lesdits éléments allongées sélectionnés et lesdits enroulements électriques (198) fonctionnent comme un rotor et conduisent les enroulements respectifs d'un moteur linéaire de façon que l'énergisation séquentielle desdits enroulements électriques (198) produise un champ mobile qui coopère avec ledit matériau conducteur (186) pour produire ladite force d'entrainement.

2. Bande transporteuse (20) à jonctions pivotantes selon la revendication 1, caractérisé en outre en ce que ladite zone de fixation est une cavité (74) définie dans la face supérieure dudit élément de base (37), et un surplomb (80, 82) défini par ladite face supérieure, qui s'étend pardessus ladite cavité (74), et en ce que ladite partie de fixation (72) dudit élément transporteur (39) est formée et structurée de manière à être reçue dans ladite cavité (74) et retenue par ledit surplomb (80, 82).

Fig. 1

30E
30C
30B
30F
30D
308
306
30O
304
28
26
30A
34
32
22
20
24

EP 0 175 483 B1

Fig.2

EP 0 175 483 B1

Fig. 3

Fig. 3A

Fig. 4B

Fig. 4A

Fig. 5A

Fig. 5B

Fig. 6

Fig. 7

Fig. 9

Fig. 8

4

Fig. 10

Fig. 11

Fig. 12

Fig. 13

Fig. 14

Fig. 15

Fig. 16

Fig. 17

246

256

248   250

252   254

Fig. 18B

266

272   270

268

264   260   262

258

Fig. 19A

266

272   270

268   260

258

Fig. 19B

282  284  286  288

274

276   278   280

Fig. 20A

Fig. 20B

290  292  294

Fig. 20C

Fig. 21

296

302

298

Fig. 22A

Fig. 22B

310

Fig. 23

312